# EUROPEAN PATENT SPECIFICATION

(11) **EP 3 315 473 B1**
(45) Date of publication and mention of the grant of the patent: **30.12.2020**
(21) Application number: 15896106.0
(22) Date of filing: 28.09.2015
(51) Int. Cl.: C04B 26/02, C08K 3/04

(54) **CARBON PLATE AND MANUFACTURING PROCESS THEREFOR**
KOHLENSTOFFPLATTE UND HERSTELLUNGSVERFAHREN DAFÜR
PLAQUE DE CARBONE ET SON PROCÉDÉ DE FABRICATION

(30) Priority: 25.06.2015 CN 201510358009
(43) Date of publication of application: 02.05.2018
(73) Proprietor: ZHEJIANG NANFU TECHNOLOGY Co., Ltd., Wuyun street, Jinyun Lishui Zhejiang (CN)
(72) Inventor: ZHAO, Xing'an, Lishui Zhejian 323000 (CN)
(74) Representative: Becker & Kurig Partnerschaft Patentanwälte PartmbB
(86) International application number: PCT/CN2015/090903
(87) International publication number: WO 2016/206211

(56) References cited:
- EP-A1- 1 384 558
- CN-A- 1 384 263
- CN-A- 1 786 082
- CN-A- 101 014 462
- CN-A- 101 284 926
- CN-A- 102 237 532
- CN-A- 104 201 391
- DATABASE WPI Week 200902 Thomson Scientific, London, GB; AN 2009-A36458 XP002787089, -& CN 101 284 926 A (FANG X) 15 October 2008 (2008-10-15)

## Description

### BACKGROUND OF THE INVENTION

### 1. Field of the Invention

The present invention relates to a field of plate manufacturing technologies, and in particular, to a carbon plate and a manufacturing process thereof.

### 2. Description of Related Art

In recent years, furniture of different types and different materials are launched in the furniture market, affecting consumers' choices. Many merchants, in order to make the furniture looks nice and profits unfairly, add harmful substances to the furniture. As a result, consumers' health is influenced at variable degrees. A problem of commercially available carbon plates is that the carbon plates cause serious pollution and are detrimental to health.

CN 101 284 926 A discloses a composite material used for manufacturing furniture and a method for utilizing the material to manufacture furniture for elimination of indoor harmful gas. The composite material is formed by mixing and stirring the following raw materials in portion by weight: 3 to 5 portions of zeolite powder, 10 to 20 portions of charcoal powder or bamboo-charcoal powder, 5 to 10 portions of medical stone powder, 2 to 5 portions of bamboo vinegar powder or wood vinegar powder, 5 to 10 portions of negative ion powder, 1 to 3 portions of ionic silver powder, 2 to 5 portions of aluminum powder and 100 innocuous resin.

EP 1 384 558 A1 discloses a gas absorbent material having a gas absorptive capacity to absorb harmful gas in the room. The gas absorbent material comprises a high-temperature carbonized charcoal which is carbonized at a temperature of about 800°C or above; a low-temperature carbonized charcoal which is carbonized at a temperature of about 500°C or below; and alginic acid or its salt or calcium oxide.

### SUMMARY OF THE INVENTION

The present invention is directed to a carbon plate and a manufacturing process thereof, so as to resolve a problem that the conventional carbon plates cause serious pollution and are detrimental to health.

A carbon plate, including the following components (in weight percentage): 31.5% to 91% of 30-150 mesh carbon powder, 3% to 25% of resin, 3% to 30% of plant fiber, 0.5% to 2.5% of fire retardant, 0.5% to 3% of dispersing agent, 1% to 3% of zeolite powder, and 1% to 5% of tea stem residue.

A carbon plate, including the following components (in weight percentage): 31.5% of 30-150 mesh carbon powder, 25% of resin, 30% of plant fiber, 2.5% of fire retardant, 3% of dispersing agent, 3% of zeolite powder, and 5% of tea stem residue.

A carbon plate, including the following components (in weight percentage): 62% of 30-150 mesh carbon powder, 15% of resin, 15% of plant fiber, 1.5% of fire retardant, 1.5% of dispersing agent, 2% of zeolite powder, and 3% of tea stem residue.

A carbon plate, including the following components (in weight percentage): 91% of 30-150 mesh carbon powder, 3% of resin, 3% of plant fiber, 0.5% of fire retardant, 0.5% of dispersing agent, 1% of zeolite powder, and 1% of tea stem residue.

A manufacturing process for a carbon plate, including the following steps: step 1: mixing raw materials according to a proportion, placing the raw materials into a stirrer, and stirring the raw materials to uniformity; step 2: feeding the materials; step 3: performing heating; and step 4: maintaining the pressure.

In the step 3, a heating temperature is 10°C to 180°C, and a time of the heating lasts 2 mins to 20 mins.

In the step 4, the pressure is maintained at a nominal pressure (PN) equal to or greater than 10 MPa, and a time of the pressure maintaining lasts 2 mins to 30 mins.

Compared with the prior art, beneficial effects of the present invention are: the present invention is high in hardness, can withstand pressure that is at least 30% higher than that can be withstand by a common carbon plate is abrasion resistant, has a buffering capacity, is small in deformation after moisture absorption, and does not contain any harmful substance. Compositions of the carbon powder are selected to further increase functions of absorbing harmful substances such as sulphide, nitride, formaldehyde, benzene, and phenol, and functions of moisture absorption and moisture-proof, moisture desorption, and odor removal. In particular, the absorption-degradation rate of ambient formaldehyde for 24 hours reaches 43%. Therefore, the carbon plate is environmental friendly.

### DESCRIPTION OF THE EMBODIMENTS

Specific processing processes of the present invention are further described in detail with reference to the process procedures:

The present invention discloses a carbon plate, including the following components (in weight percentage): 31.5% to 91% of 30-150 mesh carbon powder, 3% to 25% of resin, 3% to 30% of plant fiber, 0.5% to 2.5% of fire retardant, 0.5% to 3% of dispersing agent, 1% to 3% of zeolite powder, and 1% to 5% of tea stem residue.

Types of the carbon plate according to the present invention may be furniture panels or decorative plates of various shapes such as a square plate, a circular plate, an oval plate, and a strip-shaped plate. The carbon powder may be bamboo charcoal powder, charcoal powder, or the like. Alternatively, the carbon powder may be replaced with a carbide material that is also environmental-friendly.

The present invention further discloses a manufacturing process for a carbon plate, including the following steps: step 1: mixing raw materials according to a proportion, placing the raw materials into a stirrer, and stirring the raw materials to uniformity; step 2: feeding the materials; step 3: performing heating, wherein a heating temperature is 10°C to 180°C, and a time of the heating lasts 2 mins to 20 mins; and step 4: maintaining the pressure, wherein the pressure is maintained at a nominal pressure (PN) equal to or greater than 10 MPa, and a time of the pressure maintaining lasts 2 mins to 30 mins.

### Embodiment 1

A carbon plate, including the following components (in weight percentage): 31.5% of 30-150 mesh carbon powder, 25% of resin, 30% of plant fiber, 2.5% of fire retardant, 3% of dispersing agent, 3% of zeolite powder, and 5% of tea stem residue.

A manufacturing process for a carbon plate, including the following steps: step 1: mixing raw materials according to a proportion, placing the raw materials into a stirrer, and stirring the raw materials to be even; step 2: feeding the materials; step 3: performing heating at 10°C for 2 min; and step 4: maintaining the pressure for 2 min at a PN equal to or greater than 10 MPa, that is, pressure equal to or greater than 100 kg. Zeolite powder and tea stem residue increase the absorption-degradation function. A detection result was: the specific surface area was 275 m²/g, the pore area of charcoal was 210 m²/g, the methylene blue absorption value was 112 mg/g, the ethylene gas absorption value was 3.55 ml/g, the loss on ignition was 11.8%, the pH value was 5.4, the water content was 4.4%, and the infrared emissivity was 42%. The obtained carbon plate had high hardness and did not contain any harmful substance. Therefore, the carbon plate was environmental friendly.

### Embodiment 2

A carbon plate, including the following components (in weight percentage): 91% of 30-150 mesh carbon powder, 3% of resin, 3% of plant fiber, 0.5% of fire retardant, 0.5% of dispersing agent, 1% of zeolite powder, and 1% of tea stem residue.

A manufacturing process for a carbon plate, including the following steps: step 1: mixing raw materials according to a proportion, placing the raw materials into a stirrer, and stirring the raw materials to be even; step 2: feeding the materials; step 3: performing heating at 180°C for 20 min; and step 4: maintaining the pressure for 30 min at a PN equal to or greater than 10 MPa, that is, pressure equal to or greater than 100 kg. Zeolite powder and tea stem residue increase the absorption-degradation function. A detection result was: the specific surface area was 287 m²/g, the pore area of charcoal was 228 m²/g, the methylene blue absorption value was 107 mg/g, the ethylene gas absorption value was 3.47 ml/g, the loss on ignition was 11.6%, the pH value was 5.3, the water content was 4.8%, and the infrared emissivity was 41%. The obtained carbon plate had high hardness and did not contain any harmful substance. Therefore, the carbon plate was environmental friendly.

### Embodiment 3

A carbon plate, including the following components (in weight percentage): 62% of 30-150 mesh carbon powder, 15% of resin, 15% of plant fiber, 1.5% of fire retardant, 1.5% of dispersing agent, 2% of zeolite powder, and 3% of tea stem residue.

A manufacturing process for a carbon plate, including the following steps: step 1: mixing raw materials according to a proportion, placing the raw materials into a stirrer, and stirring the raw materials to be even; step 2: feeding the materials; step 3: performing heating at 90°C for 10 min; and step 4: maintaining the pressure for 15 min at a PN equal to or greater than 10 MPa, that is, pressure equal to or greater than 100 kg. Zeolite powder and tea stem residue increase the absorption-degradation function. The obtained carbon plate had high hardness and did not contain any harmful substance. Therefore, the carbon plate was environmental friendly.

A detection result of the present invention was: the specific surface area was 280 m²/g, the pore area of charcoal was 216 m²/g, the methylene blue absorption value was 110 mg/g, the ethylene gas absorption value was 3.45 ml/g, the loss on ignition was 11.3%, the pH value was 5.3, the water content was 4.6%, and the infrared emissivity was 43%.

The present invention provides a new type of a carbon plate and a manufacturing process thereof. The present invention is high in hardness, can withstand pressure that is at least 30% higher than that can be withstand by a common carbon plate is abrasion resistant, has a buffering capacity, and does not contain any harmful substance. In addition, the carbon plate has functions of absorbing harmful substances such as sulphide, nitride, formaldehyde, benzene, and phenol, and strong functions of moisture absorption and moisture-proof, moisture desorption, and odor removal. Therefore, the carbon plate is environmental friendly.

For a person skilled in the art, it is obvious that the present invention is not limited to details of the foregoing exemplary embodiments, and the present invention can be implemented in other specific forms without departing from the spirit or basic features of the present invention. Therefore, embodiments should be considered as exemplary and non-limiting, and the scope of the present invention is limited by the appended claims rather than the foregoing descriptions. Therefore, all changes that fall within the meaning and scope of equivalents of the claims are included in the present invention. Any numeral in the accompanying drawings in the claims should not be considered as a limitation to the related claims.

In addition, it should be understood that although the specification is described according to the implementations, it does not indicate that each implementation merely includes one independent technical solution. The description manner of the specification is merely for clear description. A person skilled in the art should consider the specification as a whole, and the technical solutions in the embodiments may be properly combined to form other implementations understandable by a person skilled in the art.

## Claims

1. A carbon plate, **characterized by** comprising the following components in weight percentage: 31.5% to 91% of 30-150 mesh carbon powder, 3% to 25% of resin, 3% to 30% of plant fiber, 0.5% to 2.5% of fire retardant, 0.5% to 3% of dispersing agent, 1% to 3% of zeolite powder, and 1% to 5% of tea stem residue.

2. The carbon plate according to claim 1, **characterized by** comprising the following components in weight percentage: 31.5% of 30-150 mesh carbon powder, 25% of resin, 30% of plant fiber, 2.5% of fire retardant, 3% of dispersing agent, 3% of zeolite powder, and 5% of tea stem residue.

3. The carbon plate according to claim 1, **characterized by** comprising the following components in weight percentage: 62% of 30-150 mesh carbon powder, 15% of resin, 15% of plant fiber, 1.5% of fire retardant, 1.5% of dispersing agent, 2% of zeolite powder, and 3% of tea stem residue.

4. The carbon plate according to claim 1, **characterized by** comprising the following components in weight percentage: 91% of 30-150 mesh carbon powder, 3% of resin, 3% of plant fiber, 0.5% of fire retardant, 0.5% of dispersing agent, 1% of zeolite powder, and 1% of tea stem residue.

5. A manufacturing process for a carbon plate according to any one of claims 1 to 4, **characterized by** comprising the following steps: step 1: mixing raw materials according to a proportion, placing the raw materials into a stirrer, and stirring the raw materials to uniformity; step 2: feeding the materials; step 3: performing heating; and step 4: maintaining the pressure.

6. The manufacturing process for a carbon plate according to claim 5, **characterized in that** in the step 3, a heating temperature is 10°C to 180°C, and a time of the heating lasts 2 mins to 20 mins.

7. The manufacturing process for a carbon plate according to claim 5, **characterized in that** in the step 4, the pressure is maintained at a nominal pressure equal to or greater than 10 MPa, and a time of the pressure maintaining lasts 2 mins to 30 mins.

## Patentansprüche

1. Kohlenstoffplatte, **dadurch gekennzeichnet, dass** sie die folgenden Komponenten in Gewichtsprozent umfasst: 31,5 % bis 91 % von 30-150 Maschen-Kohlenstoffpulver, 3 % bis 25 % Harz, 3 % bis 30 % Pflanzenfasern, 0,5 % bis 2,5 % feuerhemmendes Mittel, 0,5 % bis 3 % Dispergiermittel, 1 % bis 3 % Zeolithpulver und 1 % bis 5 % Teestielrückstand.

2. Kohlenstoffplatte gemäß Anspruch 1, **dadurch gekennzeichnet, dass** sie die folgenden Komponenten in Gewichtsprozent umfasst: 31,5% von 30-150 Maschen-Kohlenstoffpulver, 25% Harz, 30% Pflanzenfasern, 2,5% feuerhemmendes Mittel, 3% Dispergiermittel, 3% Zeolithpulver und 5% Teestielrückstände.

3. Kohlenstoffplatte gemäß Anspruch 1, **dadurch gekennzeichnet, dass** sie die folgenden Komponenten in Gewichtsprozent umfasst: 62% von 30-150 Maschen-Kohlenstoffpulver, 15% Harz, 15% Pflanzenfasern, 1,5% feuerhemmendes Mittel, 1,5% Dispergiermittel, 2% Zeolithpulver und 3% Teestielrückstand.

4. Kohlenstoffplatte gemäß Anspruch 1, **dadurch gekennzeichnet, dass** sie die folgenden Komponenten in Gewichtsprozent umfasst: 91% von 30-150 Maschen-Kohlenstoffpulver, 3% Harz, 3% Pflanzenfasern, 0,5% feuerhemmendes Mittel, 0,5% Dispergiermittel, 1% Zeolithpulver und 1% Teestielrückstand.

5. Herstellungsverfahren für eine Kohlenstoffplatte gemäß einem der Ansprüche 1 bis 4, **dadurch gekennzeichnet, dass** es die folgenden Schritte umfasst: Schritt 1: Mischen von Rohmaterialien gemäß einem Verhältnis, Einbringen der Rohmaterialien in einen Rührer und Rühren der Rohmaterialien bis zur Gleichförmigkeit; Schritt 2: Zuführen der Materialien; Schritt 3: Durchführen einer Erwärmung; und Schritt 4: Aufrechterhalten des Drucks.

6. Herstellungsverfahren für eine Kohlenstoffplatte gemäß Anspruch 5, **dadurch gekennzeichnet, dass** in Schritt 3 eine Erwärmungstemperatur von 10°C bis 180°C ist und eine Zeit der Erwärmung von 2 Minuten bis 20 Minuten dauert.

7. Herstellungsverfahren für eine Kohlenstoffplatte gemäß Anspruch 5, **dadurch gekennzeichnet, dass** in Schritt 4 der Druck bei einem Solldruck gleich oder größer als 10 MPa gehalten wird und eine Zeit des Druckhaltens 2 Minuten bis 30 Minuten dauert.

## Revendications

1. Plaque de carbone, **caractérisée en ce qu'**elle comprend les composants suivants en pourcentages massiques : de 31,5 % à 91 % de poudre de carbone de 30 à 150 mesh, de 3 % à 25 % de résine, de 3 % à 30 % de fibres végétales, de 0,5 % à 2,5 % de produit ignifuge, de 0,5 % à 3 % d'agent de dispersion, de 1 % à 3 % de poudre de zéolite, et de 1 % à 5 % de résidu de tige de thé.

2. Plaque de carbone selon la revendication 1, **caractérisée en ce qu'**elle comprend les composants suivants en pourcentages massiques : 31,5 % de poudre de carbone de 30 à 150 mesh, 25 % de résine, 30 % de fibres végétales, 2,5 % de produit ignifuge, 3 % d'agent de dispersion, 3 % de poudre de zéolite et 5 % de résidu de tige de thé.

3. Plaque de carbone selon la revendication 1, **caractérisée en ce qu'**elle comprend les composants suivants en pourcentages massiques : 62 % de poudre de carbone de 30 à 150 mesh, 15 % de résine, 15 % de fibres végétales, 1,5 % de produit ignifuge, 1,5 % d'agent de dispersion, 2 % de poudre de zéolite et 3 % de résidu de tige de thé.

4. Plaque de carbone selon la revendication 1, **caractérisée en ce qu'**elle comprend les composants suivants en pourcentages massiques : 91 % de poudre de carbone de 30 à 150 mesh, 3 % de résine, 3 % de fibres végétales, 0,5 % de produit ignifuge, 0,5 % d'agent de dispersion, 1 % de poudre de zéolite et 1 % de résidu de tige de thé.

5. Procédé de fabrication d'une plaque de carbone selon l'une quelconque des revendications 1 à 4, **caractérisé en ce qu'**il comprend les étapes suivantes : étape 1 : mélange des matières premières selon une proportion, positionnement des matières premières dans un mélangeur, et mélange de matières premières jusqu'à l'uniformité ; étape 2 : alimentation des matériaux ; étape 3 : réalisation du chauffage ; et étape 4 : maintien de la pression.

6. Procédé de fabrication d'une plaque de carbone selon la revendication 5, **caractérisé en ce que** dans l'étape 3, une température de chauffage est comprise entre 10 °C et 180 °C, et un temps de chauffage est compris entre 2 min et 20 min.

7. Procédé de fabrication d'une plaque de carbone selon la revendication 5, **caractérisé en ce que** dans l'étape 4, la pression est maintenue à une pression nominale supérieure ou égale à 10 MPa, et un temps de maintien de pression est compris entre 2 min et 30 min.
